Europäisches Patentamt

**European Patent Office** (11) Numéro de publication: **0 048 780**

Office européen des brevets **B1**

(12) **FASCICULE DE BREVET EUROPEEN**

(45) Date de publication du fascicule du brevet: **31.07.85** (51) Int. Cl.⁴: **F 16 K 3/02**

(21) Numéro de dépôt: **80401389.4**

(22) Date de dépôt: **01.10.80**

(54) **Vanne à guillotine.**

(43) Date de publication de la demande:
**07.04.82 Bulletin 82/14**

(45) Mention de la délivrance du brevet:
**31.07.85 Bulletin 85/31**

(84) Etats contractants désignés:
**AT BE CH DE GB IT LI LU NL SE**

(56) Documents cités:
**BE-A- 387 468**
**DE-A-2 714 933**
**FR-A-1 452 707**
**FR-A-1 568 532**
**FR-A-2 388 184**
**US-A-1 675 986**

(73) Titulaire: **ETABLISSEMENTS TROUVAY &**
**CAUVIN Société Anonyme**
**58, rue Général Chanzy**
**F-76600 Le Havre (FR)**
(73) Titulaire: **Morello, Aldo**
**18 bis, rue Greuze**
**F-69100 Villeurbanne (FR)**

(72) Inventeur: **Morello, Aldo**
**18 bis, rue Greuze**
**F-69100 Villeurbanne (FR)**
Inventeur: **Besnard, Henri**
**8, Place du Général Leclerc**
**F-76400 Fécamp (FR)**

(74) Mandataire: **Rodhain, Claude**
**Cabinet Claude RODHAIN 30, rue La Boétie**
**F-75008 Paris (FR)**

Courier Press, Leamington Spa, England.

EP 0 048 780 B1

# Description

La présente invention est relative à une vanne du type à guillotine plus spécialement destinée aux produits poudreux ou granulés et également aux produits pâteux, par exemple la pâte à papier.

Les vannes de ce type connues à ce jour sont généralement constituées d'un corps extérieur pourvu d'une ouverture de passage des produits, celle-ci pouvant être obturée à la demande par un coulisseau en forme de lame. Cette lame, dénommée encore guillotine, est généralement montée coulissante en translation alternative dans des glissières-guides.

L'inconvénient de ces vannes réside dans le fait qu'à chaque manoeuvre de fermeture, correspondant au déplacement de la lame guillotine en position d'obturation, une petite quantité de produit pénètre, s'accumule et se comprime à l'intérieur des glissières-guides. Cette accumulation parasite augmentant progressivement au fur et à mesure des manoeuvres, celle -ci s'oppose rapidement au déplacement rationnel de la lame et contrarie l'éanchéité recherchée en position de fermeture. En outre cet inconvénient entraîne obligatoirement le démontage fréquent de la vanne pour la remettre en ètat de fonctionnement et notamment nettoyer les glissières.

Différentes tentatives ont été faites pour remédier à ces inconvénients.

Par exemple, on a décrit dans DE—A— 27 14 933 une vanne de ce type dépourvue de joints souples et dans laquelle l'obturateur est formé de deux moitiés, supérieure et inférieure constituées chacune d'une plaque, juxtaposées l'une contre l'autre et comportant des moyens d'entraînement constitués par des prolongements latéraux en U permettant de les déplacer simultanément en sens inverse. Ces moitiés d'obturateur sont disposées entre des flasques à surface lisse ayant des rainures dans lesquelles coulissent les branches parallèles des moitiés de l'obturateur. Ce système présente l'inconvénient que l'arête active de chaque moitié de l'obturateur entraîne en la poussant devant elle une petite quantité de produit qui peut venir s'accumuler dans l'espace laissé libre par la moitié opposée de l'obturateur qui a été déplacé en sens inverse. En d'autres termes, l'accumulation nuisible de matière ne se produit plus, dans ce système, dans les glissières latérales de l'obturateur, mais au-dessus et au dessous de celui-ci. Du FR—A— 1,568,532 est connue une vanne à guillotine comportant une lame obturatice mobile en translation entre deux flasques fixes formant le corps de la vanne et percés d'un orifice pouvant être masqué ou découvert par la lame montée coulissante entre les flasques, ladite lame étant guidée par ses bords latéraux dans des glissières solidaires des flasques, du type dans lequel des profilés sont interposés entre les glissières et la lame mobile et remplissent tout l'espace de ladite glissière pour interdire au produit traversant la vanne de pénétrer dans les glissières et de s'y accumuler. On a également décrit dans FR—A—

1.568.532 une vanne comportant un corps moulé d'une seule pièce comportant une rainure périphérique interne dans laquelle coulisse la lame obturatrice avec un jeu relativement important et qui est comblée par un joint souple en U maintenu au moyen d'un étrier en U appliqué et serré contre le joint par des vis de réglage de la pression perpendiculairement au sens de déplacement de la lame. De plus ce joint souple est appliqué contre les côtés de la lame au moyen de barettes rigides dont la pression latérale sur le joint peut également également être réglée au moyen de vis, assurant ainsi un réglage dans les deux directions permettant de compenser l'usure du joint. Cette vanne laisse cependant subsister des interstices dans lesquels la matière peut pénétrer pour s'accumuler entre le joint et la lame et l'ensemble doit être démonté et nettoyé lors du remplacement du joint use.

La présente invention a pour but de remédier à ces inconvénients majeurs et vise à réaliser une vanne à guillotine perfectionnée dépourvue de joints souples sujet à l'usure, auto-nettoyante et dépourvue d'interstices dans lesquels la matière peut s'accumuler.

L'invention est caracterisée en ce que ladite lame est fixé entre deux profilés en forme de règle allongée qui en sont ainsi rendus solidaires et présentent une longueur supérieure à celle de la lame, cette longueur étant telle que lesdits profilés s'étendent encore au-delà de l'orifice, dans la position d'ouverture de la vanne, en ce que le bord inférieur de la partie active de la lame est semi-circulaire de manière qu'en position de fermeture de la vanne ce bord vienne s'appliquer contre une butée fixe serrée entre les flasques et dont le bord supérieur est également de forme semicirculaire complémentaire de celle du bord de la lame, ce dernier coïncidant avec le bord de l'orifice de telle sorte qu'au niveau de ce bord, l'ensemble flasque et butée ne forme pas de rainure ou de transition.

Suivant une caractéristique de l'invention, les profilés sont tangents au bord du cercle de cet orifice et des racleurs, destinés à nettoyer les bords des profilés en contact avec le produit, sont prévus au point de tangence des profilés et de l'orifice.

Suivant une autre caractéristique de l'invention, le bord de la partie active de la lame est semi-circulaire, et lorsque la vanne est fermée ledit bord vient s'appliquer contre une butée fixe, prise en sandwich entre les deux flasques, dont le bord est également semi-circulaire et de forme complémentaire du bord du la lame, ce bord coïncidant avec la bord de l'orifice de telle sorte qu'au niveau du bord de cet orifice, l'ensemble flasques et butée ne forme pas de rainure ou de transition.

D'autres modes particuliers de réalisation de l'invention apparaissent dans des revendications dépendantes.

La présente invention sera mieux comprise à l'aide de la description qui suit en référence aux dessins schématiques annexés représentant, à titre d'exemple non limitatif, une forme d'exécution de la vanne selon l'invention.

La Fig. 1 représente une vue en plan de la vanne selon l'invention;

La Fig. 2 représente une vue en plan du mécanisme intérieur de la vanne;

Les Fig. 3A et 3B représentent respectivement une vue en plan et une vue en coupe selon la ligne A.A de la Fig. 3A d'un des deux flasques de la vanne,

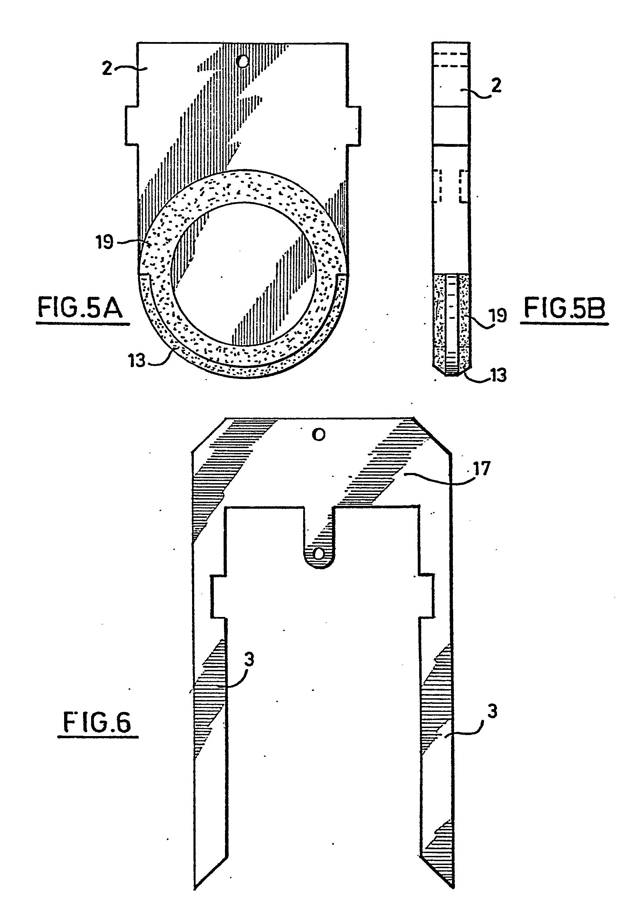

Les Fig. 4A et 4B représentent respectivement une vue en plan et une vue de gauche de la butée fixe 4;

Les Fig. 5A et 5B représentent en plan et en profil la lame guillotine;

La Fig. 6 représente une vue en plan de la face avant du châssis support de la lame;

La Fig. 7 représente une vue en coupe de l'ensemble du mécanisme selon la ligne B.B de la Fig. 2.

La vanne selon l'invention est une vanne du type à guillotine, c'est-à-dire comportant une lame 2 disposée entre deux flasques fixes 1, ces deux flasques étant percés d'un orifice 11 que la lame peut obturer en glissant entre les flasques, cette lame mobile étant guidée, dans ses déplacements en translation alternative, dans des glissières 5 solidaires des deux flasques 1. Entre ces flasques 1 et la lame mobile 2, sont interposés des profilés 3 de forme allongée solidaires des côtés latéraux de la lame mobile et notablement plus longs que cette lame; ces profilés 3 remplissent toute la rainure de la glissière et interdisent au produit traversant la vanne de s'accumuler dans lesdits glissières, évitant ains leur obturation.

a) les profilés rectilignes 3 sont tangents au bord du cercle de l'orifice 11 des flasques,

b) au point de tangence sont prévus des racleurs 15 destinés à nettoyer les bords des profilés 3 en contact avec le produit circulant dans la vanne.

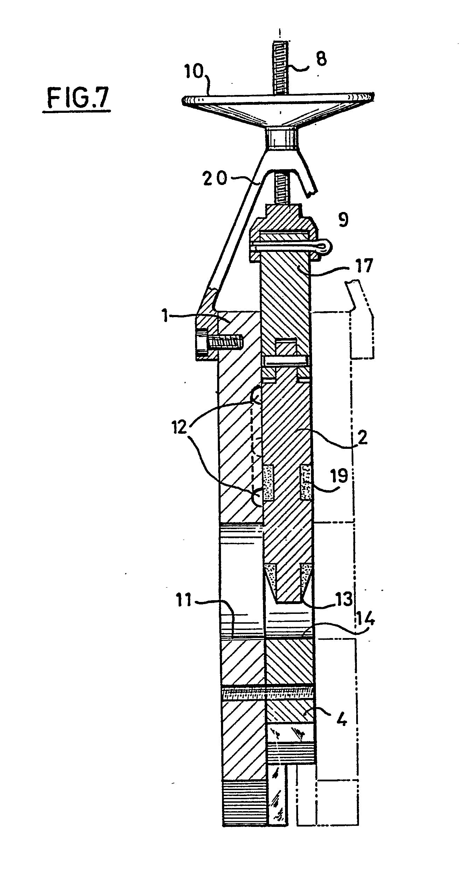

Le bord 13 de la partie active de la lame 2 est semi-circulaire et lorsque la vanne est fermée ledit bord 13 vient s'appliquer contre une pièce fixe 4 prise en sandwich entre les deux flasques 1, et dont le bord 14 est également semi-circulaire et de forme complémentaire du bord 13 de la lame 2. Ce bord 14 a le même rayon que celui de l'orifice 11 des flasques de telle sorte que sur le bord de cet orifice, l'ensemble flasques 1 et pièce 4 ne forme pas rainure ou de transition (Fig. 7.

La pièce 4 est en contact sur ses bords 16 avec les profilés 3 et, du fait que ces profilés 3 sont tangents au bord du cercle de l'orifice 11, la pièce 4 se termine de chaque côté par des parties décroissantes en forme de lame de couteau 15 qui forment les deux racleurs destinés à nettoyer les profilés 3.

Le bord actif 13 de la lame 2 est biseauté, de façon à provoquer l'écalement du produit lors de la fermeture de la vanne.

Les profilés 3 sont réunis par une entretoise 17 située du côté opposé au bord actif de la lame et l'ensemble des profilés 3 et entretoise 17 forme un châssis support de la lame 2 sur lequel vient se fixer tout systèmme de manoeuvre.

Une garniture annulare 19 de stellite est disposée de chaque côté de la lame 2 formant la portée de la lame 2 contre les flasques 1 (Fig. 7).

La lame 2 est fixée par emboîtement dans les profilés 3.

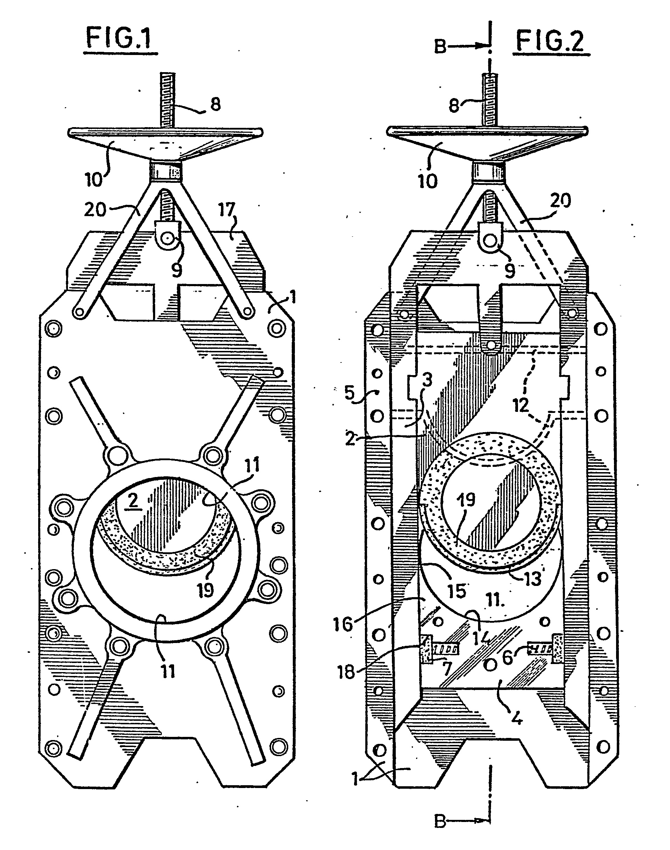

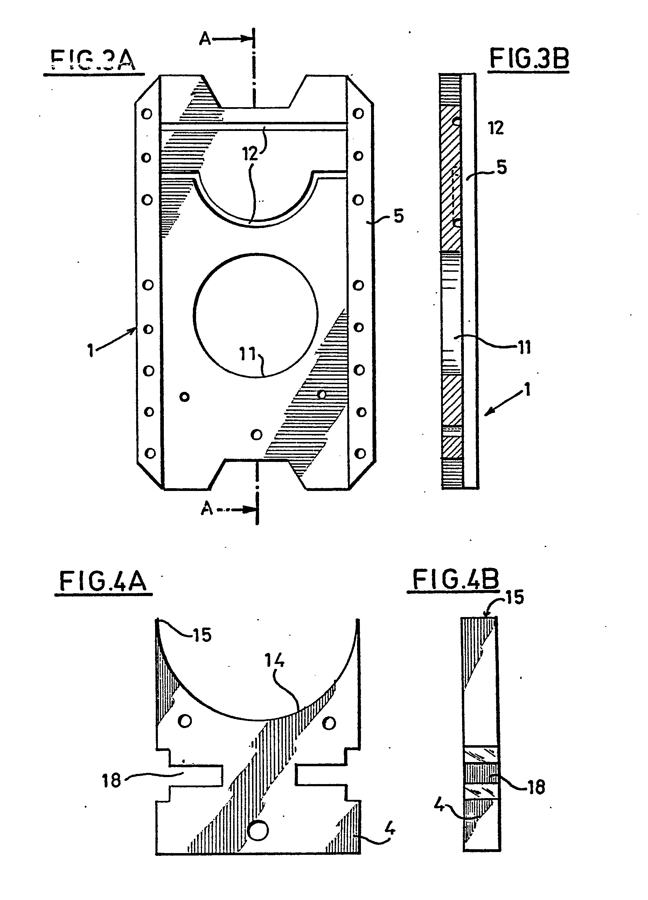

Dans la butée fixe 4 sont prévus des logements latéraux 18 destinés à recevoir des dispositifs composés d'un patin 7 en contact avec chacun des profilés 3 sur lequel il est appliqué par la force d'un ressort 6. Ce patin a deux fonctions, d'une part, le nettoyage par léchage des profilés 3 et, d'autre part, l'augmentation de l'étanchéité an univeau du contact entre la butée fixe 4 et les profilés 3. Sur les flasques 1, deux gorges 12 (Fig. 3A) ont été prévues pour y loger des joints toriques qui ont pour but d'assurer le nettoyage parfait de la lame 2, ainsi qu'une bonne étanchéité.

Pour la manoeuvre de la vanne (ouverture-fermeture), une vis à pas rapide 8 (Fig. 2) est fixée à l'aide d'une chape 9 sur l'entretoise 17 et se termine à sa partie supérieure par un volant de manoeuvre 10, à l'aide duquel on fait coulisser le châssis porte-lame 3 at 17 entre les glissières fixes 5 entraînant ainsi la lame 2. La vis 8 est maintenue sur la vanne par un triangle 20 appelé colonne de support, fixé de chaque côté des flasques 1.

**Revendications**

1. Vanne à guillotine comportant une lame obturatice (2) mobile en translation entre deux flasques fixes (1) formant le corps de la vanne et percés d'un orifice (11) pouvant être masqué ou découvert par la lame (2) montée coulissante entre les flasques, ladite lame (2) etant guidée par ses bords latéraux dans des glissières (5) solidaires des flasques, du type dans lequel des profilés (3) sont interposés entre les glissières (5) et la lame mobile (2) et remplissent tout l'espace de ladite glissière pour interdire au produit traversant la vanne de pénétrer dans les glissières et de s'y accumuler, vanne caractérisée en ce que ladite lame (2) est fixée entre deux profilés (3) en forme de règle allongée qui en sont ainsi rendus solidaires et présentent une longueur supérieure à celle de la lame, cette longueur étant telle que lesdits profilés (3) s'étendent encore au-delà de l'orifice (11) dans la position d'ouverture de la vanne, en ce que le bord inférieur (13) de la partie active de la lame (2) est semicirculaire de manière qu'en position de fermeture de la vanne, ce bord (13) vienne s'appliquer contre une butée fixe (4) serrée entre les flasques (1) et dont le bord supérieur (14) est également de forme semi-circulaire complémentaire de celle du bord (13) de la lame, ce dernier coïncidant avec le bord de l'orifice (11) de telle sorte qu'au niveau du bord de cet orifice, l'ensemble flasque (1) et butée (4) ne forme pas de rainure ou de transition.

2. Vanne selon la revendication 1, caractérisée en ce que la butée fixe (4) est en contact par des bords latéraux (16) avec les profilés (3), ceux-ci étant tangents au bord du cercle du l'orifice (11), ladite butée (4) se terminant de chaque côté par des parties décroissantes (15) formant deux râcleurs adaptés pour nettoyer les profilés (3).

3. Vanne selon l'une ou l'autre des revendications 1 ou 2, caractérisée en ce que le bord actif (13) de la lame (2) est biseauté de façon à provoquer l'écalatement du produit lors de la fermeture de la vanne.

4. Vanne selon l'une quelconque des revendications 1 à 3, caractérisée en ce que les profilés (3) sont réunis par un entretoise (17) située du côté opposé au bord actif de la lame, l'ensemble des profiles et entretoises (3 et 17) formant un chassis de support de la lame (2), sur lequel est fixé un système de manoeuvre.

5. Vanne selon l'une quelconque des revendications 1 à 4, caractérisée en ce qu'une garniture annulaire (19) de "Stellite" est prévue de chaque côté de la lame (2) pour former une portée pour cette lame contre les flasques (1).

6. Vanne selon l'une quelconque des revendications 1 à 5, caractérisée en ce que la lame (2) est fixée par emboitement dans lesdits profilés (3).

7. Vanne selon l'une quelconque des revendications 1 à 6, caractérisée en ce que, sur chaque côté latéral de la butée fixe (4) est prévu un logement (18) destiné à recevoir un dispositif de nettoyage formé d'un patin (7) en contact avec chaque profilé (3) sur lequel il est appliqué par la force d'un ressort (6).

8. Vanne selon l'une quelconque des revendications 1 à 7, caractérisée en ce que les flasques (1) comportent deux gorges (12) dans lesquelles sont logés des joints toriques destinés à parfaire le nettoyage de la lame et l'étanchéité de la vanne.

## Patentansprüche

1. Schieberventil mit einer zwischem zwei fixen Flanschen (1) geradlinig beweglichen Verschlußplatte (2), welche Flasche den Ventilkörper bilden und eine Öffnung (11) aufweisen, die durch die zwischen den Flanschen verschiebbar angeordnete Platte (2) gesperrt oder freigegeben werden kann, wobei die Platte (2) an ihren seitlichen Rändern in mit den Flanschen fest verbundenen Führungsbahnen (5) jenen Typs geführt ist, bei dem Profile (3) zwischen die Führungsbahnen (5) und die bewegliche Platte (3) engesetzt sind, die den gesamten Raum der Führungsbahn ausfüllen, um zu verhindern, daß der das Ventil passierende Stoff in die Führungsbahnen eindringt und sich dort ansemmelt, dadurch gekennzeichnet, daß die Platte (2) zwischen zwei in Form einer verlängerten Schiene ausgebildeten Profilen (3) fixiert ist, die fest miteinander verbunden sind und deren Länge größer ist als die der Platte, welche Länge so gewählt ist, daß sich die Profile (3) in der geöffneten Stellung des Ventiles noch über die Öffnung (11) hinaus erstrecken, und daß der untere Rand (13) des aktiven Teiles der Platte (2) halbkreisförmig ist, so daß dieser Rand (13) bei geschlossener Stellung des Ventiles an einem festen Anschlag (4) anliegt, der zwischen der Flanschen (1) fixiert ist und dessen oberer Rand (14) gleichfalls halbkreisförmig komplementär zur Form des Randes (13) der Platte ausgebildet ist, wobei der Rand der Platte sich mit dem Rand der Öffnung (11) deckt und in der Höhe des Randes der Öffnung die Einheit von Flansch (1) und Anschlag (4) keine Fuge oder Stufe aufweist.

2. Ventil nach Anspruch 1, dadurch gekennzeichnet, daß der feste Anschlag (4) mit seitlichen Rändern (16) mit den Profilen (3) in Berührung ist, die den Kreisrand der Öffnung (11) berühren, wobei der Anschlag (4) auf jeder Seite in verjüngten Teilen endet, die als Abstreifer zum Reinigen der Profile (3) wirken.

3. Ventil nach Anspruch 1 oder 2, dadurch gekennzeichnet, daß der aktive Rand (13) der Platte (2) abgeschrägt ist, um ein entladendes Austreten des Stoffes beim Schließen des Ventiles herbeizuführen.

4. Ventil nach einem der Ansprüche 1 bis 3, dadurch gekennzeichnet, daß die Profile (3) durch eine an der dem aktiven Rand der Platte gegenüberliegenden Seite befindliche Querstrebe (17) miteinander verbunden sind, wobei die Profil-Querstrebe-Einheit (3 und 17) einen Stützrahmen für die Platte (2) bildet, an dem ein Betätigungssystem befestigt ist.

5. Ventil nach einem der Ansprüche 1 bis 4, dadurch gekennzeichnet, daß ein ringförmiger "Stellit"-Einsatz (19) an jeder Seite der Platte (2) vorgesehen ist, der einen gegen die Flanschen (1) wirkenden Sitz für die Platte bildet.

6. Ventil nach einem der Ansprüche 1 bis 5, dadurch gekennzeichnet, daß die Platte (2) durch Formeingriff in den Profilen (3) fixiert ist.

7. Ventil nach einem der Ansprüche 1 bis 6, dadurch gekennzeichnet, daß an jedem seitlichen Bereich des festen Anschlages (4) ein Lager (18) zur Aufnahme einer aus einem Gleitschuh (7) bestehenden Reinigungseinrichtung vorgesehen ist, welcher Gleitschub mit jenem Profil (3) in Berührung steht, an dem er unter der Wirkung einer Feder (6) anliegt.

8. Ventil nach einem der Ansprüche 1 bis 7, dadurch gekennzeichnet, daß die Flansche (1) zwei Rillen (12) aufweisen, in denen O-ring-Dichtungen angeordnet sind, die die Reinigung der Platte und die Abdichtung des Ventiles vervollständigen.

## Claims

1. Sliding gate valve, consisting of a shutter plate (2) moving in translation between two fixed side plates (1) which form the body of the valve and which each have an opening (11) capable of being masked or uncovered by the plate (2), the said shutter plate (2) being mounted so that it slides between the side plates, and being guided by its lateral edges within slides (5) which are integral with the side walls, members (3) being interposed between the slides (5) and the moveable plate (2) filling all the space within the said slide in order to prevent the product passing through the valve and penetrating into the slides and accumulating there, the valve being characterised by the fact that the said shutter plate (2) is fixed between two members (3), in the form of elongated strips which are firmly connected to it and which have a length greater than that of the plate, this length being such that the said members (3) still extend beyond the opening (11) when the valve is in the open position, and by the fact that the internal edge (13) of the active part of the plate (2) is semi-circular, so that when the valve is in the closed position, this edge (13) comes into contact with a fixed stop (4) clamped between the side plates (1), the upper edge of which (14) is also semi-circular in shape, complementing that of the edge (13) of the plate, the latter coinciding with the edge of the opening (11), so that at the edge of this opening the side wall (1) and stop (4) assembly does not form any channel or transition.

2. Valve according to claim 1, characterised by the fact that the fixed stop (4) is in contact at its lateral edges (16), with the members (3), these being tangential to the edge of the circular opening (11), the said stop (4) ending on each side in diminishing parts (15), forming two scrapers for cleaning the members (3).

3. Valve according to either of claims 1 or 2, characterised by the fact that the active edge (13) of the plate (2) is bevelled so as to cause disruption of the product during closure of the valve.

4. Valve according to any of the claims 1 to 3, characterised by the fact that the members (3) are connected by a crosspiece (17) situated on the side opposite to the active edge of the plate, the assembly of members and crosspiece (3 and 17) forming a supporting chassis for the plate (2), on which there is fixed an operating system.

5. Valve according to any of the claims 1 to 4, characterised by the fact that an annular border of "Stellite" is provided on each side of the plate (2), to form a bearing surface for this plate against the side walls (1).

6. Valve according to any of the claims 1 to 5, characterised by the fact that the plate (2) is fixed by fitting it into the said members (3).

7. Valve according to any of the claims 1 to 6, characterised by the fact that on each lateral side of the fixed stop (4) there is a groove (18) intended for holding a cleaning device formed by a block (7) in contact with each member (3), to which it is applied by the force of a spring (6).

8. Valve according to any one of the claims 1 to 7, characterised by the fact that the side walls (1) have two channels (12) into which are inserted toric seals, intended for completing the cleaning of the plate and ensuring the tightness of the valve.

# FIG.1

8

10

20

17

9

1

11

2

19

11

# FIG.2

B →

8

10

20

9

5

3

2

12

19

13

15

11.

16

14

18

7

6

4

1

B →

FIG.3A

FIG.3B

FIG.4A

FIG.4B

FIG.5A

FIG.5B

FIG.6

FIG.7